# EUROPEAN PATENT APPLICATION

(11) **EP 4 327 667 A1**
(43) Date of publication of application: **28.02.2024**
(21) Application number: 22791483.5
(22) Date of filing: 25.03.2022
(51) Int. Cl.: A23L 27/00, A23L 27/20, A23L 2/00, A23L 2/52, A23L 29/00

(54) **FRAGRANCE COMPOSITION AND FOOD AND BEVERAGE**

(30) Priority: 23.04.2021 JP 2021073451
(71) Applicant: Takasago International Corporation, Tokyo 144-8721 (JP)
(72) Inventor: KATO Atsuki, Hiratsuka-shi, Kanagawa 254-0073 (JP); TANAKA Manato, Hiratsuka-shi, Kanagawa 254-0073 (JP); KAKUMU Yukari, Hiratsuka-shi, Kanagawa 254-0073 (JP)
(74) Representative: Zimmermann & Partner Patentanwälte mbB
(86) International application number: PCT/JP2022/014528
(87) International publication number: WO 2022/224708

(57) **Abstract**

Provided are: a method for covering up (masking) a component with an offensive taste or odor without affecting the flavor of a food or beverage; a flavor composition; and a food and beverage. Masking of a component with an offensive taste or odor generated from an unsaturated fatty acid using a specific flavor component without impairing the flavor of a food or beverage.

## Description

### Technical Field

The present invention relates to a flavor that masks off-flavor components generated from unsaturated fatty acids, as well as masked food and/or beverages.

### Background Art

It is known that unsaturated fatty acids in food and/or beverages can produce off-flavors due to effects such as oxidation reactions and enzymatic reactions during processing and storage. For example, in edible oils and/or fats, it is understood that 1-octen-3-ol, 1-octen-3-one, and 1,5-octadien-3-one, known as off-flavor components, are generated from unsaturated fatty acids such as linoleic acid and linolenic acid (Non Patent Literature 1), and in degraded quality beer, it is known that substances such as (E)-2-nonenal, thought to be derived from linoleic acid, are generated, contributing to cardboard-like odors and aging odors (Non Patent Literature 2). It is also known that 1-octen-3-one and (E)-2-octenal, among others, are generated as degradation components of lipids in citrus juice drinks (Non Patent Literature 3). Additionally, not only in food and/or beverages, but also in the causes of body odors and armpit odors, 1,5-octadien-3-one and 1,5-octadien-3-ol, among others, are known to be generated from unsaturated fatty acids, contributing to degradation odors (Patent Literature 1).

Since the off-flavors as described above can significantly impact the quality of a product, various methods have been proposed to mask these degradation components. For example, the use of β-damascenone or oleic acid, among others, as a masking agent for 1-octen-3-one and (E)-2-nonenal, which are odors resulting from the photodegradation of juice-containing products, has been suggested (Patent Literature 2). Additionally, a method utilizing an extract of Job's tears as a masking agent for 2-nonenal, a degradation odor in beer, has also been proposed (Patent Literature 3).

However, as degradation components derived from unsaturated fatty acids are contained in various foods and/or beverages, there has been a desire for the development of a more universal and effective technique capable of masking or reducing the off-flavor derived from unsaturated fatty acids.

### Citation List

### Patent Literatures

Patent Literature 1: Japanese Patent Application Publication No. 2003-183144
Patent Literature 2: Japanese Patent Application Publication No. 2019-170375
Patent Literature 3: Japanese Patent Application Publication No. 2017-153371

### Non Patent Literatures

Non Patent Literature 1: "Odor Components of Edible Oils and/or Fats" by Yasushi Endo, Journal of Oleo Science, Vol. 48, Issue 10, (1999)
Non Patent Literature 2: "Off flavors in Beer - Their Causes and Suppression" by Toru Kishimoto, Food Processing and Ingredients, Vol. 50, No. 12, (2015)
Non Patent Literature 3: "Light-Induced Off-flavor of Citrus Juice Packed in PET Bottles" by Toshihito Naka et al., Report of Toyo College of Food Technology and Toyo Institute of Food Technology, 27, (2009)

### Summary of Invention

### Problems to be solved by the invention

The present invention relates to a method of masking off-flavor components less perceptible (masking them) without impacting the flavor and aroma of food and/or beverages.

### Means for solution of the problems

The present inventors have studied various flavor compounds to address the above problem and have found that a specific flavor compound can mask the off-flavor components generated from unsaturated fatty acids without compromising the flavor and aroma of food and/or beverages.

The present invention includes the contents of the following [1] to [8].
[1] An off-flavor suppressor for components derived from unsaturated fatty acids, comprising as an active ingredient at least one selected from the group consisting of nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol.
[2] The off-flavor suppressor described in [1], wherein the off-flavor components derived from unsaturated fatty acids are at least one selected from the group consisting of (E)-2-nonenal, (E)-2-octenal, 1-octen-3-one, 1,5-octadien-3-one, 1-octen-3-ol, and 1,5-octadien-3-ol.
[3] A flavor composition for suppressing off-flavors of components derived from unsaturated fatty acids, comprising as an active ingredient at least one selected from the group consisting of nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol.
[4] The flavor composition for suppressing off-flavors described in [3], wherein the off-flavor components derived from unsaturated fatty acids are at least one selected from the group consisting of (E)-2-nonenal, (E)-2-octenal, 1-octen-3-one, 1,5-octadien-3-one, 1-octen-3-ol, and 1,5-octadien-3-ol.
[5] A food and/or beverage containing off-flavor components derived from unsaturated fatty acids, comprising 0.001 ppt to 100 ppm of at least one selected from the group consisting of nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol.
[6] The food and/or beverage described in [5], wherein the off-flavor components derived from unsaturated fatty acids are at least one selected from the group consisting of (E)-2-nonenal, (E)-2-octenal, 1-octen-3-one, 1,5-octadien-3-one, 1-octen-3-ol, and 1,5-octadien-3-ol.
[7] A method for masking off-flavor components derived from unsaturated fatty acids, comprising blending at least one selected from the group consisting of nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol in a food and/or beverage so that a total concentration thereof is 0.001 ppt or more and 100 ppm or less.
[8] The method described in [7], wherein the off-flavor components derived from unsaturated fatty acids are at least one selected from the group consisting of (E)-2-nonenal, (E)-2-octenal, 1-octen-3-one, 1,5-octadien-3-one, 1-octen-3-ol, and 1,5-octadien-3-ol.

### Advantageous Effects of Invention

According to the present invention, by adding a specific flavor component to a food and/or beverage, it is possible to mask off-flavors such as degradation odors caused by degradation of unsaturated fatty acids.

### Description of Embodiments

In the present invention, off-flavor components generated from unsaturated fatty acids include (E)-2-nonenal, (E)-2-octenal, 1-octen-3-one, 1,5-octadien-3-one, 1-octen-3-ol, and 1,5-octadien-3-ol.

The masking component used in the present invention includes nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol, and the like, all of which are known flavor components, and commercially available products can be used. Moreover, some of these flavor components have stereoisomers (such as cis-trans isomers, enantiomers, and diastereomers), and it is possible to use a specific stereoisomer alone or a mixture of these stereoisomers.

The flavor composition of the present invention is a composition used to impart or enhance flavor in food and/or beverages.

Additional components besides masking components, which can be mixed into the flavor composition and food and/or beverages of the present invention, and the like, can include various synthetic flavors, natural flavors, natural essential oils, plant extracts, and the like. For example, natural essential oils, natural flavors, synthetic flavors, and the like, as described in "Japan Patent Office Bulletin, Collection of Well-known Prior Arts (Fragrance) Part II Food Fragrance, P. 88-131, issued January 14, 2000" can be used.

The flavor composition of the present invention can contain, as needed, normally used substances, including solvents such as water and ethanol; and retaining agents such as ethylene glycol, propylene glycol, dipropylene glycol, hexylene glycol, glycerin, triethyl citrate, medium chain fatty acid triglycerides, medium chain fatty acid diglycerides, and animal and plant oils and/or fats.

The food and/or beverage of the present invention can include: beverages such as fruit beverages, vegetable beverages, refreshing beverages, carbonated beverages, near water, functional beverages, drink preparations, liquors, non-alcoholic beverages, dairy beverages, and protein beverages; tea beverages and preference beverages such as black tea, green tea, oolong tea, herbal tea, coffee, and cocoa; plant-based alternative beverages such as soy milk beverages, oat milk beverages, and almond milk beverages; fermented dairy products such as yogurts and cheeses; cold desserts such as frozen desserts, lacto ice, ice milk, and ice cream; desserts such as pudding, jelly, Bavarois, and mousse; confectionery such as chewing gum, candies, gummy candies, tablets, refreshing sweets, chocolates, chocolate confectionery, and snack confectionery; pastes and creams such as jam, dessert sauce, flower paste, margarine, fat spread, filling cream, flower paste, and whipped cream; agricultural food and agricultural processed food; meat and processed meat food; fish and processed fishery food; dairy oil products; rice food products such as retort rice food and germinated brown rice; noodles such as instant noodles, dried noodles, and chilled noodles; breads such as bread, meat buns, and deli bread; soup foods; prepared food such as retort food, pasta sauce, canned food, and frozen and chilled food; seasonings such as sauce, soy sauce, tare, tsuyu, mayonnaise, ketchup, dressing, tube products, soup stock base, Chinese seasoning, Western-style seasoning, and various roux; spices; animal and plant edible oils and/or fats; and plant-based alternative foods, and the like.

Moreover, the flavor composition of the present invention can also be used in oral products such as toothpaste, mouthwash, oral cleansers, mouth sprays, and gargle medicine; and dishwashing detergents, and the like.

In the flavor composition of the present invention, the content of the masking component may vary depending on the other components blended in and can't be definitively stated. However, usually, based on the weight of the flavor composition, it can be set within the concentration range of 0.001 ppm or more and 100000 ppm or less, and preferably 0.01 ppm or more and 10000 ppm or less, and more preferably within the concentration range of 0.1 ppm or more and 10000 ppm or less. If the content of the masking component is less than 0.001 ppm, the masking effect of the present invention cannot be obtained, and if the content exceeds 100000 ppm, the masking component itself may affect the flavor, which is not preferable.

Also, the content of the masking component contained in the food and/or beverage of the present invention can be set to 0.001 ppt or more and 100 ppm or less, preferably within the concentration range of 0.1 ppt or more and 1 ppm or less, and more preferably within the concentration range of 1 ppt or more and 1 ppm or less, based on the weight of the food and/or beverage. If the content of the masking component is less than 0.001 ppt, the masking effect of the present invention cannot be obtained, and if the content exceeds 100 ppm, the masking component itself may affect the flavor of the food and/or beverage, which is not preferable.

### Examples

The present invention will be described in more detail with reference to the Examples below, but the present invention is not limited to these Examples.

### Example 1 (Masking effect of nootkatone on degradation components derived from unsaturated fatty acids)

In ion-exchanged water, each degradation component was added to achieve the concentrations listed in Table 1, and aqueous solutions I to VI containing these degradation components were prepared.

**Table 1**

| Number | Degradation Component | Concentration of Degradation Component in Solution |
|---|---|---|
| I | (E)-2-nonenal | 1 ppb |
| II | (E)-2-octenal | 10 ppb |
| III | 1-octen-3-one | 1 ppb |
| IV | 1,5-octadien-3-one | 100 ppt |
| V | 1-octen-3-ol | 10 ppb |
| VI | 1,5-octadien-3-ol | 10 ppb |

For the aforementioned aqueous solutions containing degradation components, nootkatone was added at the concentrations listed in Table 2 to confirm the intensity of the off-flavor (masking effect) in each sample and the intensity of the masking component itself (the impact on the flavor of the food and/or beverage itself).

The test was conducted as follows. Eight experienced panelists were selected to conduct a sensory evaluation. The intensity of the off-flavor of the aqueous solution containing the degradation components derived from unsaturated fatty acids, without added masking components, was set as "Evaluation: 4." The ion-exchanged water free of any degradation components was set as "Evaluation: 0." The intensity of the off-flavor (masking effect) of each sample was then relatively evaluated according to the following evaluation criteria.

### (Evaluation Criteria)

Off-flavor is strongly sensed: 4 points
Off-flavor is sensed: 3 points
Off-flavor is slightly sensed: 2 points
Off flavor is barely sensed: 1 point
Off-flavor is not sensed at all: 0 points

Also, the intensity of the masking components (impact on the flavor of the food and/or beverage itself) was absolutely evaluated according to the following evaluation criteria.

### (Evaluation Criteria)

Masking component is strongly sensed: 4 points
Masking component is sensed: 3 points
Masking component is slightly sensed: 2 points
Masking component is barely sensed: 1 point
Masking component is not sensed at all: 0 points

The results are as in Table 2, which shows the average scores of the evaluation results from each panelist.

**Table 2**

| | I | | II | | III | |
|---|---|---|---|---|---|---|
| Concentration of Nootkatone Added | Off-Flavor Intensity | Masking Component Intensity | Off-Flavor Intensity | Masking Component Intensity | Off-Flavor Intensity | Masking Component Intensity |
| 10 ppm | 0.8 | 3.8 | 0.4 | 4.0 | 0.9 | 3.9 |
| 5 ppm | 1.1 | 3.4 | 0.6 | 3.8 | 1.1 | 3.3 |
| 1 ppm | 1.8 | 2.9 | 1.5 | 2.6 | 1.6 | 2.6 |
| 100 ppb | 2.1 | 1.6 | 1.9 | 1.5 | 2.1 | 1.5 |
| 10 ppb | 2.4 | 1.1 | 2.5 | 1.1 | 2.3 | 1.0 |
| 1 ppb | 2.8 | 0.9 | 2.6 | 0.9 | 2.6 | 0.8 |
| 100 ppt | 3.3 | 0.3 | 3.1 | 0.5 | 3.1 | 0.4 |
| 10 ppt | 3.4 | 0.3 | 3.5 | 0.4 | 3.4 | 0.3 |

| | IV | | V | | VI | |
|---|---|---|---|---|---|---|
| Concentration of Nootkatone Added | Off-Flavor Intensity | Masking Component Intensity | Off-Flavor Intensity | Masking Component Intensity | Off-Flavor Intensity | Masking Component Intensity |
| 10 ppm | 0.9 | 4.0 | 0.5 | 3.9 | 0.6 | 4.0 |
| 5 ppm | 1.3 | 3.6 | 0.9 | 3.3 | 0.6 | 3.6 |
| 1 ppm | 2.0 | 2.5 | 1.5 | 2.5 | 1.1 | 2.8 |
| 100 ppb | 2.4 | 1.6 | 1.8 | 1.5 | 1.5 | 1.9 |
| 10 ppb | 2.9 | 0.9 | 2.5 | 1.3 | 2.1 | 0.9 |
| 1 ppb | 3.1 | 0.4 | 2.5 | 0.4 | 2.5 | 0.8 |
| 100 ppt | 3.5 | 0.3 | 2.9 | 0.3 | 3.0 | 0.5 |
| 10 ppt | 3.6 | 0.1 | 3.4 | 0.3 | 3.1 | 0.1 |

From the results in Table 2, it is clear that nootkatone, at a concentration of 100 ppt or more and 1 ppm or less, masks the off-flavor derived from unsaturated fatty acids, and does not affect the flavor of the food and/or beverage itself.

### Example 2 (Masking effect of linalyl butyrate on degradation components derived from unsaturated fatty acids)

The samples prepared in the same manner as in Example 1 were used to confirm the intensity of the off-flavor (masking effect) derived from unsaturated fatty acids by linalyl butyrate and the intensity of the masking components (impact on the flavor of the food and/or beverage itself). The evaluation method was conducted in the same way as in Example 1. The results are as in Table 3, which shows the average scores of each panelist.

**Table 3**

| | I | | II | | III | |
|---|---|---|---|---|---|---|
| Concentration of Linalyl Butyrate Added | Off-Flavor Intensity | Masking Component Intensity | Off-Flavor Intensity | Masking Component Intensity | Off-Flavor Intensity | Masking Component Intensity |
| 5 ppm | 1.0 | 3.8 | 0.4 | 4.0 | 1.0 | 3.8 |
| 1 ppm | 1.3 | 3.3 | 0.6 | 3.5 | 1.5 | 3.0 |
| 500 ppb | 1.3 | 2.8 | 0.9 | 3.4 | 1.8 | 2.5 |
| 100 ppb | 1.9 | 2.0 | 1.4 | 2.5 | 1.9 | 2.3 |
| 50 ppb | 2.0 | 1.6 | 1.5 | 2.3 | 1.9 | 1.9 |
| 10 ppb | 2.3 | 1.4 | 1.8 | 1.8 | 2.3 | 1.6 |
| 1 ppb | 2.6 | 1.0 | 2.3 | 1.5 | 2.6 | 1.4 |
| 100 ppt | 3.1 | 0.9 | 2.8 | 1.3 | 3.3 | 0.9 |
| 10 ppt | 3.4 | 0.3 | 3.1 | 0.8 | 3.5 | 0.8 |

| | IV | | V | | VI | |
|---|---|---|---|---|---|---|
| Concentration of Linalyl Butyrate Added | Off-Flavor Intensity | Masking Component Intensity | Off-Flavor Intensity | Masking Component Intensity | Off-Flavor Intensity | Masking Component Intensity |
| 5 ppm | 0.9 | 3.8 | 0.8 | 3.9 | 0.1 | 3.9 |
| 1 ppm | 0.9 | 3.0 | 1.0 | 3.3 | 0.5 | 2.6 |
| 500 ppb | 1.3 | 2.8 | 1.3 | 3.0 | 0.9 | 2.4 |
| 100 ppb | 1.6 | 1.8 | 1.9 | 2.4 | 1.3 | 1.6 |
| 50 ppb | 2.1 | 1.8 | 2.1 | 1.9 | 1.5 | 1.4 |
| 10 ppb | 2.6 | 1.6 | 2.3 | 1.5 | 1.8 | 1.0 |
| 1 ppb | 2.9 | 1.0 | 2.6 | 1.0 | 2.0 | 0.5 |
| 100 ppt | 3.0 | 0.8 | 3.0 | 0.5 | 2.4 | 0.4 |
| 10 ppt | 3.6 | 0.5 | 3.3 | 0.4 | 2.5 | 0.0 |

From the results in Table 3, it is clear that linalyl butyrate, at a concentration of 10 ppt or more and 1 ppm or less, masks the off-flavor derived from unsaturated fatty acids, and does not affect the flavor of the food and/or beverage itself.

### Example 3 (Masking effect of 1,4-dioxacycloheptadecan-5,17-dione on degradation components derived from unsaturated fatty acids)

The samples prepared in the same manner as in Example 1 were used to confirm the intensity of the off-flavor (masking effect) derived from unsaturated fatty acids by 1,4-dioxacycloheptadecan-5,17-dione and the intensity of the masking components (impact on the flavor of the food and/or beverage itself). The evaluation method was conducted in the same way as in Example 1. The results are as in Table 4, which shows the average scores of each panelist.

**Table 4**

| | I | | II | | III | |
|---|---|---|---|---|---|---|
| Concentration of 1,4-Dioxacycloheptadecan-5,17-Dione Added | Off-Flavor Intensity | Masking Component Intensity | Off-Flavor Intensity | Masking Component Intensity | Off-Flavor Intensity | Masking Component Intensity |
| 100 ppb | 0.3 | 4.0 | 0.6 | 3.9 | 0.3 | 3.8 |
| 10 ppb | 1.0 | 3.3 | 1.5 | 2.8 | 1.0 | 2.8 |
| 1 ppb | 1.6 | 2.1 | 1.8 | 2.1 | 1.4 | 1.6 |
| 100 ppt | 2.0 | 1.8 | 2.0 | 1.5 | 1.8 | 1.0 |
| 10 ppt | 2.3 | 1.0 | 2.4 | 0.6 | 2.4 | 0.8 |
| 1 ppt | 2.8 | 0.5 | 2.8 | 0.5 | 2.6 | 0.4 |
| 0.1 ppt | 2.9 | 0.1 | 3.1 | 0.3 | 3.0 | 0.3 |
| 0.01 ppt | 3.3 | 0.0 | 3.4 | 0.0 | 3.4 | 0.1 |
| 0.001 ppt | 3.5 | 0.0 | 3.4 | 0.0 | 3.6 | 0.1 |

| | IV | | V | | VI | |
|---|---|---|---|---|---|---|
| Concentration of 1,4-Dioxacycloheptadecan-5,17-Dione Added | Off-Flavor Intensity | Masking Component Intensity | Off-Flavor Intensity | Masking Component Intensity | Off-Flavor Intensity | Masking Component Intensity |
| 100 ppb | 1.0 | 3.8 | 0.5 | 3.9 | 0.9 | 3.8 |
| 10 ppb | 1.6 | 2.0 | 1.4 | 3.0 | 1.4 | 2.8 |
| 1 ppb | 2.1 | 1.3 | 1.9 | 1.9 | 1.8 | 1.8 |
| 100 ppt | 2.8 | 1.0 | 2.1 | 1.5 | 2.1 | 1.3 |
| 10 ppt | 2.9 | 0.5 | 2.5 | 0.9 | 2.5 | 1.1 |
| 1 ppt | 3.0 | 0.3 | 2.8 | 0.6 | 2.5 | 0.8 |
| 0.1 ppt | 3.4 | 0.0 | 2.9 | 0.3 | 2.9 | 0.5 |
| 0.01 ppt | 3.5 | 0.0 | 3.1 | 0.1 | 3.0 | 0.3 |
| 0.001 ppt | 3.8 | 0.0 | 3.4 | 0.0 | 3.3 | 0.1 |

From the results in Table 4, it is clear that 1,4-dioxacycloheptadecan-5,17-dione, at a concentration of 0.01 ppt or more and 10 ppb or less, masks the off-flavor derived from unsaturated fatty acids, and does not affect the flavor of the food and/or beverage itself.

### Example 4 (Masking effect of 2,3-hexanedione on degradation components derived from unsaturated fatty acids)

The samples prepared in the same manner as in Example 1 were used to confirm the intensity of the off-flavor (masking effect) derived from unsaturated fatty acids by 2,3-hexanedione and the intensity of the masking components (impact on the flavor of the food and/or beverage itself). The evaluation method was conducted in the same way as in Example 1. The results are as in Table 5, which shows the average scores of each panelist.

**Table 5**

| | I | | II | | III | |
|---|---|---|---|---|---|---|
| Concentration of 2,3-Hexanedione Added | Off-Flavor Intensity | Masking Component Intensity | Off-Flavor Intensity | Masking Component Intensity | Off-Flavor Intensity | Masking Component Intensity |
| 10 ppm | 0.9 | 3.8 | 1.0 | 3.8 | 1.5 | 3.6 |
| 5 ppm | 1.1 | 3.5 | 1.4 | 3.5 | 1.8 | 3.3 |
| 1 ppm | 1.6 | 3.3 | 2.0 | 2.8 | 2.3 | 2.8 |
| 500 ppb | 2.0 | 2.5 | 2.0 | 2.3 | 2.5 | 2.3 |
| 100 ppb | 2.4 | 2.0 | 2.0 | 2.1 | 3.0 | 2.3 |
| 50 ppb | 2.6 | 1.6 | 2.5 | 1.8 | 3.4 | 1.6 |
| 10 ppb | 3.3 | 1.3 | 2.6 | 1.3 | 3.6 | 1.3 |
| 5 ppb | 3.4 | 0.8 | 3.0 | 1.0 | 3.9 | 0.8 |
| 1 ppb | 3.4 | 0.4 | 3.0 | 0.5 | 4.0 | 0.4 |

| | IV | | V | | VI | |
|---|---|---|---|---|---|---|
| Concentration of 2,3-Hexanedione Added | Off-Flavor Intensity | Masking Component Intensity | Off-Flavor Intensity | Masking Component Intensity | Off-Flavor Intensity | Masking Component Intensity |
| 10 ppm | 0.8 | 4.0 | 0.4 | 3.9 | 0.5 | 3.9 |
| 5 ppm | 1.5 | 3.6 | 0.9 | 3.5 | 1.0 | 3.3 |
| 1 ppm | 2.1 | 3.1 | 1.5 | 2.6 | 1.6 | 2.5 |
| 500 ppb | 2.6 | 2.4 | 1.8 | 2.6 | 2.1 | 2.0 |
| 100 ppb | 2.9 | 1.6 | 2.0 | 2.1 | 2.6 | 1.6 |
| 50 ppb | 2.9 | 1.1 | 2.3 | 1.9 | 2.8 | 1.5 |
| 10 ppb | 3.4 | 0.9 | 2.5 | 1.3 | 3.0 | 0.9 |
| 5 ppb | 3.5 | 0.4 | 2.9 | 0.6 | 3.4 | 0.5 |
| 1 ppb | 3.6 | 0.1 | 3.1 | 0.4 | 3.4 | 0.3 |

From the results in Table 5, it is clear that 2,3-hexanedione, at a concentration of 1 ppb or more and 1 ppm or less, masks the off-flavor derived from unsaturated fatty acids, and does not affect the flavor of the food and/or beverage itself.

### Example 5 (Masking effect of β-damascenone on degradation components derived from unsaturated fatty acids)

The samples prepared in the same manner as in Example 1 were used to confirm the intensity of the off-flavor (masking effect) derived from unsaturated fatty acids by β-damascenone and the intensity of the masking components (impact on the flavor of the food and/or beverage itself). The evaluation method was conducted in the same way as in Example 1. The results are as in Table 6, which shows the average scores of each panelist.

**Table 6**

| | I | | II | | III | |
|---|---|---|---|---|---|---|
| Concentration of β-Damascenone Added | Off-Flavor Intensity | Masking Component Intensity | Off-Flavor Intensity | Masking Component Intensity | Off-Flavor Intensity | Masking Component Intensity |
| 100 ppb | 1.0 | 3.6 | 0.8 | 3.8 | 1.3 | 3.8 |
| 10 ppb | 1.4 | 3.0 | 0.9 | 3.4 | 1.4 | 3.4 |
| 1 ppb | 1.8 | 2.6 | 1.1 | 3.0 | 1.9 | 2.9 |
| 100 ppt | 2.3 | 2.0 | 1.4 | 2.4 | 2.3 | 2.1 |
| 10 ppt | 2.4 | 1.6 | 1.9 | 1.8 | 2.5 | 1.8 |
| 1 ppt | 2.5 | 1.4 | 2.1 | 1.3 | 2.9 | 1.5 |
| 0.1 ppt | 2.9 | 1.0 | 2.4 | 1.1 | 3.3 | 1.0 |
| 0.01 ppt | 3.5 | 0.8 | 2.8 | 0.9 | 3.6 | 0.6 |
| 0.001 ppt | 3.5 | 0.1 | 2.9 | 0.8 | 3.6 | 0.4 |

| | IV | | V | | VI | |
|---|---|---|---|---|---|---|
| Concentration of β-Damascenone Added | Off-Flavor Intensity | Masking Component Intensity | Off-Flavor Intensity | Masking Component Intensity | Off-Flavor Intensity | Masking Component Intensity |
| 100 ppb | 1.6 | 3.1 | 0.8 | 3.8 | 0.0 | 3.6 |
| 10 ppb | 1.6 | 3.0 | 1.1 | 3.6 | 0.2 | 3.1 |
| 1 ppb | 2.3 | 2.0 | 1.5 | 3.1 | 0.6 | 2.8 |
| 100 ppt | 2.5 | 1.8 | 2.0 | 2.4 | 0.9 | 2.1 |
| 10 ppt | 2.8 | 1.4 | 2.4 | 1.6 | 1.3 | 1.7 |
| 1 ppt | 3.1 | 1.1 | 2.4 | 1.6 | 1.7 | 1.1 |
| 0.1 ppt | 3.3 | 0.8 | 2.6 | 1.1 | 1.9 | 0.8 |
| 0.01 ppt | 3.4 | 0.4 | 3.1 | 1.0 | 2.1 | 0.7 |
| 0.001 ppt | 3.5 | 0.3 | 3.4 | 0.6 | 2.6 | 0.3 |

From the results in Table 6, it is clear that β-damascenone, at a concentration of 0.001 ppt or more and 10 ppb or less, masks the off-flavor derived from unsaturated fatty acids, and does not affect the flavor of the food and/or beverage itself.

### Example 6 (Masking effect of α-ionone on degradation components derived from unsaturated fatty acids)

The samples prepared in the same manner as in Example 1 were used to confirm the intensity of the off-flavor (masking effect) derived from unsaturated fatty acids by α-ionone and the intensity of the masking components (impact on the flavor of the food and/or beverage itself). The evaluation method was conducted in the same way as in Example 1. The results are as in Table 7, which shows the average scores of each panelist.

**Table 7**

| | I | | II | | III | |
|---|---|---|---|---|---|---|
| Concentration of α-Ionone Added | Off-Flavor Intensity | Masking Component Intensity | Off-Flavor Intensity | Masking Component Intensity | Off-Flavor Intensity | Masking Component Intensity |
| 10 ppm | 0.3 | 4.0 | 0.0 | 4.0 | 0.1 | 4.0 |
| 1 ppm | 0.6 | 3.6 | 0.1 | 3.5 | 0.8 | 3.5 |
| 100 ppb | 1.3 | 3.0 | 0.8 | 2.9 | 1.6 | 2.6 |
| 10 ppb | 1.8 | 2.3 | 1.5 | 2.3 | 1.9 | 1.9 |
| 1 ppb | 2.3 | 1.8 | 1.9 | 1.5 | 2.4 | 1.5 |
| 100 ppt | 2.6 | 1.1 | 2.4 | 1.1 | 2.8 | 0.9 |
| 10 ppt | 3.1 | 0.8 | 2.5 | 0.8 | 3.0 | 0.8 |
| 1 ppt | 3.6 | 0.6 | 2.9 | 0.3 | 3.4 | 0.5 |
| 0.1 ppt | 3.9 | 0.3 | 3.1 | 0.1 | 3.6 | 0.3 |

| | IV | | V | | VI | |
|---|---|---|---|---|---|---|
| Concentration of α-Ionone Added | Off-Flavor Intensity | Masking Component Intensity | Off-Flavor Intensity | Masking Component Intensity | Off-Flavor Intensity | Masking Component Intensity |
| 10 ppm | 0.1 | 4.0 | 0.0 | 4.0 | 0.0 | 4.0 |
| 1 ppm | 1.0 | 3.5 | 0.5 | 3.4 | 0.1 | 3.5 |
| 100 ppb | 1.6 | 2.5 | 1.0 | 2.8 | 0.8 | 2.5 |
| 10 ppb | 2.1 | 1.8 | 1.5 | 2.1 | 1.5 | 1.9 |
| 1 ppb | 2.4 | 1.0 | 1.9 | 1.3 | 1.8 | 1.1 |
| 100 ppt | 2.9 | 0.8 | 2.3 | 1.0 | 2.0 | 0.8 |
| 10 ppt | 3.1 | 0.6 | 2.5 | 0.8 | 2.5 | 0.5 |
| 1 ppt | 3.4 | 0.3 | 3.0 | 0.3 | 2.9 | 0.3 |
| 0.1 ppt | 3.5 | 0.0 | 3.1 | 0.1 | 3.1 | 0.1 |

From the results in Table 7, it is clear that α-ionone, at a concentration of 1 ppt or more and 100 ppb or less, masks the off-flavor derived from unsaturated fatty acids, and does not affect the flavor of the food and/or beverage itself.

### Example 7 (Masking effect of β-ionone on degradation components derived from unsaturated fatty acids)

The samples prepared in the same manner as in Example 1 were used to confirm the intensity of the off-flavor (masking effect) derived from unsaturated fatty acids by β-ionone and the intensity of the masking components (impact on the flavor of the food and/or beverage itself). The evaluation method was conducted in the same way as in Example 1. The results are as in Table 8, which shows the average scores of each panelist.

**Table 8**

| | I | | II | | III | |
|---|---|---|---|---|---|---|
| Concentration of β-Ionone Added | Off-Flavor Intensity | Masking Component Intensity | Off-Flavor Intensity | Masking Component Intensity | Off-Flavor Intensity | Masking Component Intensity |
| 1 ppm | 0.5 | 3.9 | 0.1 | 3.9 | 0.8 | 3.8 |
| 100 ppb | 0.8 | 3.3 | 0.8 | 3.4 | 1.4 | 3.1 |
| 10 ppb | 1.4 | 2.4 | 1.4 | 2.6 | 1.6 | 2.3 |
| 1 ppb | 1.8 | 1.9 | 1.6 | 2.1 | 2.0 | 1.5 |
| 100 ppt | 2.3 | 1.3 | 2.0 | 1.4 | 2.5 | 1.3 |
| 10 ppt | 2.6 | 0.8 | 2.3 | 1.1 | 2.8 | 0.6 |
| 1 ppt | 2.6 | 0.5 | 2.6 | 0.9 | 3.0 | 0.5 |
| 0.1 ppt | 3.1 | 0.5 | 3.0 | 0.5 | 3.3 | 0.4 |
| 0.01 ppt | 3.4 | 0.4 | 3.1 | 0.3 | 3.5 | 0.3 |

| | IV | | V | | VI | |
|---|---|---|---|---|---|---|
| Concentration of β-Ionone Added | Off-Flavor Intensity | Masking Component Intensity | Off-Flavor Intensity | Masking Component Intensity | Off-Flavor Intensity | Masking Component Intensity |
| 1 ppm | 1.0 | 3.8 | 0.3 | 3.9 | 0.4 | 4.0 |
| 100 ppb | 1.6 | 2.8 | 0.8 | 3.3 | 0.8 | 3.8 |
| 10 ppb | 2.3 | 2.1 | 1.4 | 2.5 | 1.5 | 2.9 |
| 1 ppb | 2.5 | 1.8 | 1.8 | 2.0 | 1.8 | 2.1 |
| 100 ppt | 3.0 | 1.0 | 2.3 | 1.3 | 2.1 | 1.6 |
| 10 ppt | 3.4 | 0.5 | 2.5 | 0.6 | 2.3 | 1.0 |
| 1 ppt | 3.5 | 0.4 | 2.5 | 0.6 | 2.6 | 0.9 |
| 0.1 ppt | 3.5 | 0.3 | 3.0 | 0.4 | 2.9 | 0.5 |
| 0.01 ppt | 3.8 | 0.1 | 3.3 | 0.1 | 3.3 | 0.3 |

From the results in Table 8, it is clear that β-ionone, at a concentration of 0.1 ppt or more and 100 ppb or less, masks the off-flavor derived from unsaturated fatty acids, and does not affect the flavor of the food and/or beverage itself.

### Example 8 (Masking effect of α-methyl ionone on degradation components derived from unsaturated fatty acids)

The samples prepared in the same manner as in Example 1 were used to confirm the intensity of the off-flavor (masking effect) derived from unsaturated fatty acids by α-methyl ionone and the intensity of the masking components (impact on the flavor of the food and/or beverage itself). The evaluation method was conducted in the same way as in Example 1. The results are as in Table 9, which shows the average scores of each panelist.

**Table 9**

| | I | | II | | III | |
|---|---|---|---|---|---|---|
| Concentration of α-Methyl Ionone Added | Off-Flavor Intensity | Masking Component Intensity | Off-Flavor Intensity | Masking Component Intensity | Off-Flavor Intensity | Masking Component Intensity |
| 1 ppm | 0.3 | 4.0 | 0.3 | 4.0 | 0.3 | 4.0 |
| 100 ppb | 0.3 | 3.5 | 0.4 | 3.4 | 0.3 | 3.4 |
| 10 ppb | 1.0 | 2.9 | 0.8 | 2.8 | 1.3 | 2.6 |
| 1 ppb | 1.5 | 2.1 | 1.0 | 1.8 | 1.4 | 1.9 |
| 100 ppt | 1.8 | 1.5 | 1.1 | 1.6 | 1.9 | 1.4 |
| 10 ppt | 2.4 | 1.1 | 1.5 | 1.4 | 2.3 | 1.0 |
| 1 ppt | 2.9 | 0.8 | 2.1 | 0.9 | 2.6 | 0.6 |
| 0.1 ppt | 3.3 | 0.3 | 2.8 | 0.6 | 3.1 | 0.5 |
| 0.01 ppt | 3.9 | 0.1 | 3.1 | 0.4 | 3.4 | 0.1 |

| | IV | | V | | VI | |
|---|---|---|---|---|---|---|
| Concentration of α-Methyl Ionone Added | Off-Flavor Intensity | Masking Component Intensity | Off-Flavor Intensity | Masking Component Intensity | Off-Flavor Intensity | Masking Component Intensity |
| 1 ppm | 0.4 | 4.0 | 0.1 | 4.0 | 0.5 | 4.0 |
| 100 ppb | 0.8 | 3.0 | 0.5 | 3.4 | 0.6 | 3.5 |
| 10 ppb | 1.4 | 2.4 | 0.8 | 2.8 | 1.4 | 2.9 |
| 1 ppb | 1.5 | 1.5 | 1.4 | 1.8 | 1.4 | 2.1 |
| 100 ppt | 1.9 | 1.3 | 1.8 | 1.5 | 2.0 | 1.8 |
| 10 ppt | 2.6 | 0.9 | 2.4 | 0.9 | 2.4 | 1.3 |
| 1 ppt | 2.9 | 0.8 | 2.8 | 0.8 | 2.8 | 0.6 |
| 0.1 ppt | 3.3 | 0.5 | 3.3 | 0.3 | 3.3 | 0.5 |
| 0.01 ppt | 3.4 | 0.4 | 3.6 | 0.1 | 3.5 | 0.4 |

From the results in Table 9, it is clear that α-methyl ionone, at a concentration of 0.1 ppt or more and 100 ppb or less, masks the off-flavor derived from unsaturated fatty acids, and does not affect the flavor of the food and/or beverage itself.

### Example 9 (Masking effect of γ-methyl ionone on degradation components derived from unsaturated fatty acids)

The samples prepared in the same manner as in Example 1 were used to confirm the intensity of the off-flavor (masking effect) derived from unsaturated fatty acids by γ-methyl ionone and the intensity of the masking components (impact on the flavor of the food and/or beverage itself). The evaluation method was conducted in the same way as in Example 1. The results are as in Table 10, which shows the average scores of each panelist.

**Table 10**

| | I | | II | | III | |
|---|---|---|---|---|---|---|
| Concentration of γ-Methyl Ionone Added | Off-Flavor Intensity | Masking Component Intensity | Off-Flavor Intensity | Masking Component Intensity | Off-Flavor Intensity | Masking Component Intensity |
| 1 ppm | 0.3 | 4.0 | 0.3 | 4.0 | 0.3 | 4.0 |
| 100 ppb | 1.0 | 3.5 | 0.6 | 3.8 | 1.1 | 3.5 |
| 10 ppb | 1.6 | 2.5 | 1.1 | 2.8 | 1.5 | 2.5 |
| 1 ppb | 2.1 | 2.0 | 1.5 | 2.1 | 2.0 | 1.6 |
| 100 ppt | 2.4 | 1.5 | 2.0 | 1.5 | 2.4 | 0.9 |
| 10 ppt | 2.5 | 1.1 | 2.5 | 1.3 | 2.8 | 0.6 |
| 1 ppt | 3.1 | 0.8 | 2.8 | 0.8 | 3.1 | 0.4 |
| 0.1 ppt | 3.4 | 0.6 | 3.1 | 0.5 | 3.3 | 0.3 |
| 0.01 ppt | 3.8 | 0.3 | 3.3 | 0.4 | 3.4 | 0.3 |

| | IV | | V | | VI | |
|---|---|---|---|---|---|---|
| Concentration of γ-Methyl Ionone Added | Off-Flavor Intensity | Masking Component Intensity | Off-Flavor Intensity | Masking Component Intensity | Off-Flavor Intensity | Masking Component Intensity |
| 1 ppm | 0.6 | 4.0 | 0.1 | 4.0 | 0.5 | 4.0 |
| 100 ppb | 1.0 | 3.4 | 0.8 | 3.8 | 0.9 | 3.4 |
| 10 ppb | 1.6 | 2.3 | 1.5 | 2.9 | 1.3 | 2.8 |
| 1 ppb | 2.1 | 1.5 | 1.9 | 2.3 | 1.9 | 1.9 |
| 100 ppt | 2.8 | 0.6 | 2.1 | 1.4 | 2.1 | 1.6 |
| 10 ppt | 3.3 | 0.5 | 2.6 | 1.0 | 2.4 | 1.3 |
| 1 ppt | 3.4 | 0.3 | 3.3 | 0.4 | 2.8 | 1.0 |
| 0.1 ppt | 3.5 | 0.0 | 3.3 | 0.4 | 3.1 | 0.9 |
| 0.01 ppt | 3.8 | 0.0 | 3.5 | 0.0 | 3.1 | 0.4 |

From the results in Table 10, it is clear that γ-methyl ionone, at a concentration of 1 ppt or more and 10 ppb or less, masks the off-flavor derived from unsaturated fatty acids, and does not affect the flavor of the food and/or beverage itself.

### Example 10 (Masking effect of oleic acid on degradation components derived from unsaturated fatty acids)

The samples prepared in the same manner as in Example 1 were used to confirm the intensity of the off-flavor (masking effect) derived from unsaturated fatty acids by oleic acid and the intensity of the masking components (impact on the flavor of the food and/or beverage itself). The evaluation method was conducted in the same way as in Example 1. The results are as in Table 11, which shows the average scores of each panelist.

**Table 11**

| | I | | II | | III | |
|---|---|---|---|---|---|---|
| Concentration of Oleic Acid Added | Off-Flavor Intensity | Masking Component Intensity | Off-Flavor Intensity | Masking Component Intensity | Off-Flavor Intensity | Masking Component Intensity |
| 10 ppm | 1.3 | 3.9 | 1.1 | 3.5 | 1.9 | 3.6 |
| 5 ppm | 1.4 | 2.9 | 1.1 | 3.1 | 2.4 | 3.3 |
| 1 ppm | 1.8 | 2.3 | 1.6 | 2.3 | 2.8 | 2.3 |
| 500 ppb | 2.4 | 1.9 | 1.5 | 1.5 | 2.5 | 1.6 |
| 100 ppb | 2.8 | 1.6 | 1.9 | 1.3 | 3.3 | 1.1 |
| 50 ppb | 3.1 | 1.1 | 2.5 | 0.9 | 3.4 | 0.9 |
| 10 ppb | 3.5 | 0.8 | 2.8 | 0.6 | 3.5 | 0.5 |

| | IV | | V | | VI | |
|---|---|---|---|---|---|---|
| Concentration of Oleic Acid Added | Off-Flavor Intensity | Masking Component Intensity | Off-Flavor Intensity | Masking Component Intensity | Off-Flavor Intensity | Masking Component Intensity |
| 10 ppm | 1.5 | 2.8 | 1.1 | 3.9 | 1.3 | 3.1 |
| 5 ppm | 1.9 | 2.0 | 1.8 | 3.3 | 1.5 | 2.8 |
| 1 ppm | 2.0 | 1.8 | 1.9 | 2.4 | 1.3 | 2.0 |
| 500 ppb | 2.5 | 1.0 | 2.3 | 1.5 | 1.6 | 1.3 |
| 100 ppb | 2.9 | 0.6 | 2.9 | 1.4 | 1.9 | 1.0 |
| 50 ppb | 3.3 | 0.5 | 2.6 | 0.8 | 2.4 | 0.9 |
| 10 ppb | 3.4 | 0.1 | 3.4 | 0.5 | 2.6 | 0.6 |

From the results in Table 11, it is clear that oleic acid, at a concentration of 10 ppb or more and 10 ppm or less, masks the off-flavor derived from unsaturated fatty acids, and does not affect the flavor of the food and/or beverage itself.

### Example 11 (Masking effect of nerolidol on degradation components derived from unsaturated fatty acids)

The samples prepared in the same manner as in Example 1 were used to confirm the intensity of the off-flavor (masking effect) derived from unsaturated fatty acids by nerolidol and the intensity of the masking components (impact on the flavor of the food and/or beverage itself). The evaluation method was conducted in the same way as in Example 1. The results are as in Table 12, which shows the average scores of each panelist.

**Table 12**

| | I | | II | | III | |
|---|---|---|---|---|---|---|
| Concentration of Nerolidol Added | Off-Flavor Intensity | Masking Component Intensity | Off-Flavor Intensity | Masking Component Intensity | Off-Flavor Intensity | Masking Component Intensity |
| 10 ppm | 0.8 | 3.8 | 0.5 | 3.8 | 0.4 | 3.6 |
| 5 ppm | 1.0 | 2.9 | 0.8 | 3.4 | 0.9 | 3.4 |
| 1 ppm | 1.6 | 2.0 | 1.5 | 2.4 | 1.5 | 2.1 |
| 100 ppb | 2.0 | 1.1 | 1.9 | 1.5 | 2.0 | 1.5 |
| 10 ppb | 2.4 | 0.6 | 2.3 | 0.8 | 2.5 | 0.8 |
| 1 ppb | 2.8 | 0.4 | 2.6 | 0.4 | 3.0 | 0.4 |
| 100 ppt | 3.3 | 0.3 | 3.0 | 0.1 | 3.4 | 0.3 |
| 10 ppt | 3.6 | 0.1 | 3.4 | 0.0 | 3.6 | 0.1 |

| | IV | | V | | VI | |
|---|---|---|---|---|---|---|
| Concentration of Nerolidol Added | Off-Flavor Intensity | Masking Component Intensity | Off-Flavor Intensity | Masking Component Intensity | Off-Flavor Intensity | Masking Component Intensity |
| 10 ppm | 1.4 | 3.6 | 0.6 | 3.9 | 0.8 | 3.9 |
| 5 ppm | 1.9 | 3.0 | 1.0 | 3.5 | 1.1 | 3.5 |
| 1 ppm | 2.3 | 2.0 | 1.6 | 2.6 | 1.8 | 2.5 |
| 100 ppb | 2.6 | 1.3 | 2.1 | 1.4 | 2.1 | 1.3 |
| 10 ppb | 3.0 | 0.6 | 2.5 | 0.9 | 2.4 | 0.8 |
| 1 ppb | 3.1 | 0.4 | 2.6 | 0.6 | 3.1 | 0.3 |
| 100 ppt | 3.4 | 0.1 | 3.1 | 0.3 | 3.3 | 0.1 |
| 10 ppt | 3.6 | 0.1 | 3.6 | 0.1 | 3.5 | 0.0 |

From the results in Table 12, it is clear that nerolidol, at a concentration of 100 ppt or more and 5 ppm or less, masks the off-flavor derived from unsaturated fatty acids, and does not affect the flavor of the food and/or beverage itself.

### Example 12 (Masking effect of 4-methyl-2-phenyl-2-pentenal on degradation components derived from unsaturated fatty acids)

The samples prepared in the same manner as in Example 1 were used to confirm the intensity of the off-flavor (masking effect) derived from unsaturated fatty acids by 4-methyl-2-phenyl-2-pentenal and the intensity of the masking components (impact on the flavor of the food and/or beverage itself). The evaluation method was conducted in the same way as in Example 1. The results are as in Table 13, which shows the average scores of each panelist.

**Table 13**

| | I | | II | | III | |
|---|---|---|---|---|---|---|
| Concentration of 4-Methyl-2-Phenyl-2-Pentenal Added | Off-Flavor Intensity | Masking Component Intensity | Off-Flavor Intensity | Masking Component Intensity | Off-Flavor Intensity | Masking Component Intensity |
| 50 ppm | 0.3 | 4.0 | 0.6 | 3.9 | 1.3 | 3.8 |
| 10 ppm | 0.5 | 3.8 | 1.0 | 3.4 | 1.6 | 3.5 |
| 5 ppm | 1.1 | 2.9 | 1.4 | 2.6 | 1.8 | 3.0 |
| 1 ppm | 1.6 | 1.9 | 1.6 | 2.1 | 2.1 | 2.5 |
| 100 ppb | 1.8 | 1.4 | 2.0 | 1.6 | 2.6 | 1.8 |
| 10 ppb | 2.3 | 0.9 | 2.5 | 1.1 | 3.1 | 1.4 |
| 1 ppb | 2.8 | 0.5 | 2.8 | 0.5 | 3.4 | 0.9 |
| 100 ppt | 3.3 | 0.4 | 3.0 | 0.4 | 3.6 | 0.5 |

| | IV | | V | | VI | |
|---|---|---|---|---|---|---|
| Concentration of 4-Methyl-2-Phenyl-2-Pentenal Added | Off-Flavor Intensity | Masking Component Intensity | Off-Flavor Intensity | Masking Component Intensity | Off-Flavor Intensity | Masking Component Intensity |
| 50 ppm | 1.0 | 3.6 | 0.5 | 3.9 | 0.1 | 3.5 |
| 10 ppm | 1.4 | 3.0 | 0.6 | 3.5 | 0.4 | 3.1 |
| 5 ppm | 2.0 | 2.3 | 0.8 | 2.8 | 0.4 | 2.4 |
| 1 ppm | 2.3 | 1.9 | 1.1 | 2.4 | 0.9 | 1.8 |
| 100 ppb | 2.6 | 1.4 | 1.6 | 1.6 | 1.0 | 1.3 |
| 10 ppb | 3.0 | 1.0 | 1.8 | 1.4 | 1.4 | 0.8 |
| 1 ppb | 3.6 | 0.4 | 2.3 | 0.8 | 1.8 | 0.3 |
| 100 ppt | 3.6 | 0.3 | 2.8 | 0.6 | 2.1 | 0.0 |

From the results in Table 13, it is clear that 4-methyl-2-phenyl-2-pentenal, at a concentration of 100 ppt or more and 10 ppm or less, masks the off-flavor derived from unsaturated fatty acids, and does not affect the flavor of the food and/or beverage itself. Example 13 (Masking effect of menthyl 3-hydroxybutyrate on degradation components derived from unsaturated fatty acids)

The samples prepared in the same manner as in Example 1 were used to confirm the intensity of the off-flavor (masking effect) derived from unsaturated fatty acids by menthyl 3-hydroxybutyrate and the intensity of the masking components (impact on the flavor of the food and/or beverage itself). The evaluation method was conducted in the same way as in Example 1. The results are as in Table 14, which shows the average scores of each panelist.

**Table 14**

| | I | | II | | III | |
|---|---|---|---|---|---|---|
| Concentration of Menthyl 3-Hydroxybutyrate Added | Off-Flavor Intensity | Masking Component Intensity | Off-Flavor Intensity | Masking Component Intensity | Off-Flavor Intensity | Masking Component Intensity |
| 50 ppm | 1.4 | 3.5 | 1.1 | 3.5 | 1.8 | 3.5 |
| 10 ppm | 1.9 | 2.5 | 1.9 | 2.1 | 2.0 | 2.6 |
| 1 ppm | 2.5 | 1.9 | 2.0 | 1.9 | 2.4 | 1.8 |
| 100 ppb | 2.9 | 1.5 | 2.3 | 1.4 | 2.9 | 1.5 |
| 10 ppb | 3.0 | 0.9 | 2.8 | 0.9 | 2.9 | 1.0 |
| 1 ppb | 3.1 | 0.6 | 3.0 | 0.6 | 3.4 | 0.6 |
| 100 ppt | 3.4 | 0.3 | 3.4 | 0.4 | 3.6 | 0.3 |
| 10 ppt | 3.6 | 0.1 | 3.4 | 0.4 | 3.6 | 0.3 |

| | IV | | V | | VI | |
|---|---|---|---|---|---|---|
| Concentration of Menthyl 3-Hydroxybutyrate Added | Off-Flavor Intensity | Masking Component Intensity | Off-Flavor Intensity | Masking Component Intensity | Off-Flavor Intensity | Masking Component Intensity |
| 50 ppm | 2.0 | 3.1 | 1.5 | 3.5 | 1.3 | 3.6 |
| 10 ppm | 2.5 | 2.6 | 2.0 | 2.4 | 1.6 | 2.5 |
| 5 ppm | 2.5 | 1.8 | 2.4 | 1.6 | 1.8 | 1.8 |
| 1 ppm | 3.0 | 1.1 | 2.5 | 1.0 | 2.1 | 1.4 |
| 100 ppb | 3.1 | 0.8 | 2.8 | 1.0 | 2.5 | 0.9 |
| 10 ppb | 3.4 | 0.6 | 2.9 | 0.8 | 2.9 | 0.6 |
| 1 ppb | 3.8 | 0.1 | 3.3 | 0.4 | 2.9 | 0.3 |
| 100 ppt | 3.8 | 0.1 | 3.5 | 0.3 | 3.0 | 0.1 |

From the results in Table 14, it is clear that menthyl 3-hydroxybutyrate, at a concentration of 10 ppt or more and 10 ppm or less, masks the off-flavor derived from unsaturated fatty acids, and does not affect the flavor of the food and/or beverage itself. Example 14 (Masking effect of 2-menthoxyethanol on degradation components derived from unsaturated fatty acids)

The samples prepared in the same manner as in Example 1 were used to confirm the intensity of the off-flavor (masking effect) derived from unsaturated fatty acids by 2-menthoxyethanol and the intensity of the masking components (impact on the flavor of the food and/or beverage itself). The evaluation method was conducted in the same way as in Example 1. The results are as in Table 15, which shows the average scores of each panelist.

**Table 15**

| | I | | II | | III | |
|---|---|---|---|---|---|---|
| Concentration of 2-Menthoxyethanol Added | Off-Flavor Intensity | Masking Component Intensity | Off-Flavor Intensity | Masking Component Intensity | Off-Flavor Intensity | Masking Component Intensity |
| 100 ppm | 1.0 | 3.8 | 1.3 | 3.8 | 2.0 | 3.9 |
| 50 ppm | 1.4 | 3.5 | 1.5 | 3.4 | 2.0 | 3.8 |
| 10 ppm | 1.8 | 2.3 | 2.0 | 2.6 | 2.3 | 2.5 |
| 1 ppm | 2.5 | 1.6 | 2.4 | 2.0 | 2.4 | 1.9 |
| 100 ppb | 2.8 | 1.3 | 2.5 | 1.6 | 2.5 | 1.8 |
| 10 ppb | 3.0 | 0.8 | 2.9 | 1.1 | 2.9 | 1.1 |
| 1 ppb | 3.4 | 0.5 | 3.3 | 0.8 | 3.1 | 0.8 |
| 100 ppt | 3.8 | 0.3 | 3.4 | 0.5 | 3.3 | 0.6 |

| | IV | | V | | VI | |
|---|---|---|---|---|---|---|
| Concentration of 2-Menthoxyethanol Added | Off-Flavor Intensity | Masking Component Intensity | Off-Flavor Intensity | Masking Component Intensity | Off-Flavor Intensity | Masking Component Intensity |
| 100 ppm | 1.8 | 3.9 | 1.6 | 3.8 | 1.3 | 4.0 |
| 50 ppm | 1.9 | 3.4 | 1.8 | 3.5 | 1.5 | 3.8 |
| 10 ppm | 2.3 | 2.6 | 2.3 | 2.6 | 1.9 | 2.5 |
| 1 ppm | 2.4 | 2.3 | 2.3 | 1.8 | 2.0 | 2.0 |
| 100 ppb | 2.5 | 1.6 | 2.5 | 1.4 | 2.6 | 1.8 |
| 10 ppb | 3.0 | 1.0 | 2.6 | 0.5 | 2.8 | 1.0 |
| 1 ppb | 3.4 | 0.5 | 3.1 | 0.4 | 3.3 | 0.6 |
| 100 ppt | 3.5 | 0.1 | 3.3 | 0.1 | 3.4 | 0.3 |

From the results in Table 15, it is clear that 2-menthoxyethanol, at a concentration of 10 ppb or more and 10 ppm or less, masks the off-flavor derived from unsaturated fatty acids, and does not affect the flavor of the food and/or beverage itself. Example 15 (Masking effect of 3-menthoxypropan-1,2-diol on degradation components derived from unsaturated fatty acids)

The samples prepared in the same manner as in Example 1 were used to confirm the intensity of the off-flavor (masking effect) derived from unsaturated fatty acids by 3-menthoxypropan-1,2-diol and the intensity of the masking components (impact on the flavor of the food and/or beverage itself). The evaluation method was conducted in the same way as in Example 1. The results are as in Table 16, which shows the average scores of each panelist.

**Table 16**

| | I | | II | | III | |
|---|---|---|---|---|---|---|
| Concentration of 3-Menthoxypropan-1,2-Diol Added | Off-Flavor Intensity | Masking Component Intensity | Off-Flavor Intensity | Masking Component Intensity | Off-Flavor Intensity | Masking Component Intensity |
| 100 ppm | 1.8 | 3.3 | 1.1 | 4.0 | 1.6 | 3.8 |
| 50 ppm | 1.9 | 2.5 | 1.5 | 3.1 | 1.9 | 3.0 |
| 10 ppm | 2.6 | 1.9 | 1.8 | 2.0 | 2.3 | 2.1 |
| 1 ppm | 2.9 | 1.1 | 2.3 | 1.4 | 2.5 | 1.5 |
| 100 ppb | 3.1 | 0.8 | 2.8 | 1.0 | 2.8 | 1.1 |
| 10 ppb | 3.1 | 0.6 | 3.0 | 0.5 | 2.9 | 0.6 |
| 1 ppb | 3.4 | 0.3 | 3.0 | 0.4 | 3.3 | 0.5 |
| 100 ppt | 3.4 | 0.3 | 3.1 | 0.4 | 3.3 | 0.1 |

| | IV | | V | | VI | |
|---|---|---|---|---|---|---|
| Concentration of 3-Menthoxypropan-1,2-Diol Added | Off-Flavor Intensity | Masking Component Intensity | Off-Flavor Intensity | Masking Component Intensity | Off-Flavor Intensity | Masking Component Intensity |
| 100 ppm | 2.1 | 3.0 | 1.4 | 3.8 | 1.3 | 3.5 |
| 50 ppm | 2.5 | 2.4 | 1.6 | 2.0 | 1.9 | 2.9 |
| 10 ppm | 2.9 | 1.5 | 2.0 | 2.1 | 2.3 | 2.0 |
| 1 ppm | 3.3 | 1.0 | 2.6 | 1.4 | 2.6 | 0.8 |
| 100 ppb | 3.5 | 0.9 | 2.5 | 1.0 | 3.0 | 0.4 |
| 10 ppb | 3.5 | 0.1 | 2.6 | 0.6 | 3.0 | 0.4 |
| 1 ppb | 3.8 | 0.0 | 3.1 | 0.3 | 3.0 | 0.1 |
| 100 ppt | 3.9 | 0.0 | 3.3 | 0.3 | 3.0 | 0.0 |

From the results in Table 16, it is clear that 3-menthoxypropan-1,2-diol, at a concentration of 100 ppt or more and 100 ppm or less, masks the off-flavor derived from unsaturated fatty acids, and does not affect the flavor of the food and/or beverage itself. Example 16 (Masking effect of β-ionone on degradation components derived from unsaturated fatty acids)

To commercially available shortening ("Pampas LTR30" manufactured by Fuji Oil Co., Ltd.), each degradation component was added to prepare degradation component-added shortenings I and II at the concentrations listed in Table 17. To these degradation component-added shortenings, β-ionone was added at the concentrations listed in Table 18 to confirm the intensity of the off-flavor (masking effect) and the intensity of the masking components (impact on the flavor of the shortening itself) for each sample.

**Table 17**

| Number | Degradation Component | Concentration of Degradation Component in Dough |
|---|---|---|
| I | (E)-2-octenal | 500 ppb |
| II | 1,5-octadien-3-one | 1 ppb |

### (Evaluation Method)

Eight experienced panelists were selected to conduct a sensory evaluation similar to that of Example 1. The results are as in Table 18, which shows the average scores of the evaluation results from each panelist.

**Table 18**

| | I | | II | |
|---|---|---|---|---|
| Concentration of β-Ionone Added | Off-Flavor Intensity | Masking Component Intensity | Off-Flavor Intensity | Masking Component Intensity |
| 10 ppb | 1.1 | 2.6 | 2.0 | 2.3 |
| 1 ppb | 1.5 | 2.1 | 2.4 | 1.9 |
| 100 ppt | 2.4 | 1.8 | 2.8 | 1.5 |
| 10 ppt | 2.6 | 1.1 | 3.4 | 0.9 |
| 1 ppt | 3.1 | 0.6 | 3.6 | 0.4 |

From the results in Table 18, it is clear that β-ionone, at a concentration of 10 ppt or more and 10 ppb or less, masks the off-flavor derived from unsaturated fatty acids, and does not affect the flavor of the shortening itself.

### Example 17 (Masking effect of β-damascenone on degradation components derived from unsaturated fatty acids)

The same method as in Example 16 was used to confirm the intensity of the off-flavor (masking effect) derived from unsaturated fatty acids by β-damascenone and the intensity of the masking components (impact on the flavor of the shortening itself). The results are as in Table 19, which shows the average scores of each panelist.

**Table 19**

| | I | | II | |
|---|---|---|---|---|
| Concentration of β-Damascenone Added | Off-Flavor Intensity | Masking Component Intensity | Off-Flavor Intensity | Masking Component Intensity |
| 10 ppb | 1.1 | 3.1 | 2.0 | 2.6 |
| 1 ppb | 1.8 | 2.9 | 2.3 | 2.5 |
| 100 ppt | 2.3 | 2.1 | 2.5 | 1.9 |
| 10 ppt | 2.6 | 1.5 | 3.0 | 1.3 |
| 1 ppt | 3.1 | 1.1 | 3.4 | 0.9 |

From the results in Table 19, it is clear that β-damascenone, at a concentration of 10 ppt or more and 10 ppb or less, masks the off-flavor derived from unsaturated fatty acids, and does not affect the flavor of the shortening itself.

### Example 18 (Masking effect of oleic acid on degradation components derived from unsaturated fatty acids)

To commercially available mayonnaise ("Kewpie Mayonnaise" manufactured by Kewpie Corporation), each degradation component was added to prepare degradation component-added mayonnaises I and II at the concentrations listed in Table 20. To these degradation component-added mayonnaises, oleic acid was added at the concentrations listed in Table 21 to confirm the intensity of the off-flavor (masking effect) and the intensity of the masking components (impact on the flavor of the mayonnaise itself) for each sample.

**Table 20**

| Number | Degradation Component | Concentration of Degradation Component in Dough |
|---|---|---|
| I | 1-octen-3-ol | 200 ppb |
| II | 1,5-octadien-3-one | 5 ppm |

### (Evaluation Method)

Six experienced panelists were selected to conduct a sensory evaluation similar to that of Example 1. The results are as in Table 21, which shows the average scores of the evaluation results from each panelist.

**Table 21**

| | I | |
|---|---|---|
| Concentration of Oleic Acid Added | Off-Flavor Intensity | Masking Component Intensity |
| 100 ppm | 0.5 | 2.2 |
| 50 ppm | 0.8 | 1.7 |
| 10 ppm | 1.2 | 0.8 |
| 5 ppm | 1.7 | 0.7 |
| 1 ppm | 1.8 | 0.3 |
| 500 ppb | 2.5 | 0.2 |
| 100 ppb | 3.3 | 0.0 |

From the results in Table 21, it is clear that oleic acid, at a concentration of 500 ppb or more and 100 ppm or less, masks the off-flavor derived from unsaturated fatty acids, and does not affect the flavor of the mayonnaise itself.

### Example 19 (Masking effect of menthyl 3-hydroxybutyrate on degradation components derived from unsaturated fatty acids)

To the degradation component-added mayonnaise II listed in Table 20, menthyl 3-hydroxybutyrate was added at the concentrations listed in Table 22 to confirm the intensity of the off-flavor (masking effect) and the intensity of the masking component (impact on the flavor of the mayonnaise itself) for each sample.

**Table 22**

| | II | |
|---|---|---|
| Concentration of Menthyl 3-Hydroxybutyrate Added | Off-Flavor Intensity | Masking Component Intensity |
| 100 ppm | 0.6 | 2.0 |
| 50 ppm | 0.6 | 1.6 |
| 10 ppm | 0.6 | 1.0 |
| 1 ppm | 0.8 | 0.6 |
| 100 ppb | 1.6 | 0.4 |
| 10 ppb | 2.2 | 0.2 |
| 1 ppb | 3.0 | 0.2 |
| 100 ppt | 3.0 | 0.2 |

From the results in Table 22, it is clear that menthyl 3-hydroxybutyrate, at a concentration of 100 ppt or more and 100 ppm or less, masks the off-flavor derived from unsaturated fatty acids, and does not affect the flavor of the mayonnaise itself. Example 20 (Masking effect of 1,4-dioxacycloheptadecan-5,17-dione on degradation components derived from unsaturated fatty acids)

To commercially available soymilk ("Delicious Unadjusted Soymilk" manufactured by Kikkoman Corporation), each degradation component was added to prepare degradation component-added soymilks at the concentrations listed in Table 23. To these degradation component-added soymilks, 1,4-dioxacycloheptadecan-5,17-dione was added at the concentrations listed in Table 23 to confirm the intensity of the off-flavor (masking effect) and the intensity of the masking components (impact on the flavor of the soymilk itself) for each sample.

**Table 23**

| Number | Degradation Component | Concentration of Degradation Component in Dough |
|---|---|---|
| I | (E)-2-nonenal | 5 ppb |
| II | 1-octen-3-ol | 500 ppb |

### (Evaluation Method)

Eight experienced panelists were selected to conduct a sensory evaluation similar to that of Example 1. The results are as in Table 24, which shows the average scores of the evaluation results from each panelist.

**Table 24**

| | I | | II | |
|---|---|---|---|---|
| Concentration of 1,4-Dioxacycloheptadecan-5,17-Dione Added | Off-Flavor Intensity | Masking Component Intensity | Off-Flavor Intensity | Masking Component Intensity |
| 1 ppm | 0.6 | 2.6 | 0.5 | 2.8 |
| 100 ppb | 1.0 | 1.9 | 1.0 | 2.1 |
| 10 ppb | 1.8 | 1.0 | 1.3 | 1.3 |
| 1 ppb | 2.3 | 0.3 | 1.8 | 0.9 |
| 100 ppt | 2.9 | 0.0 | 2.0 | 0.5 |
| 10 ppt | 3.0 | 0.0 | 2.5 | 0.4 |

From the results in Table 24, it is clear that 1,4-dioxacycloheptadecan-5,17-dione, at a concentration of 10 ppt or more and 1 ppm or less, masks the off-flavor derived from unsaturated fatty acids, and does not affect the flavor of the soymilk itself.

### Example 21 (Masking effect of α-methyl ionone on degradation components derived from unsaturated fatty acids)

The same method as in Example 20 was used to confirm the intensity of the off-flavor (masking effect) derived from unsaturated fatty acids by α-methyl ionone and the intensity of the masking components (impact on the flavor of the soymilk itself). The results are as in Table 25, which shows the average scores of each panelist.

**Table 25**

| | I | | II | |
|---|---|---|---|---|
| Concentration of α-Methyl Ionone Added | Off-Flavor Intensity | Masking Component Intensity | Off-Flavor Intensity | Masking Component Intensity |
| 1 ppm | 0.5 | 3.9 | 0.4 | 3.9 |
| 100 ppb | 1.0 | 3.1 | 0.9 | 2.8 |
| 10 ppb | 1.9 | 1.9 | 1.3 | 1.4 |
| 1 ppb | 2.6 | 0.8 | 2.1 | 0.8 |
| 100 ppt | 3.0 | 0.1 | 2.5 | 0.4 |

From the results in Table 25, it is clear that α-methyl ionone, at a concentration of 100 ppt or more and 100 ppb or less, masks the off-flavor derived from unsaturated fatty acids, and does not affect the flavor of the soymilk itself.

### Example 22 (Masking effect of menthyl 3-hydroxybutyrate on degradation components derived from unsaturated fatty acids)

The same method as in Example 20 was used to confirm the intensity of the off-flavor (masking effect) derived from unsaturated fatty acids by menthyl 3-hydroxybutyrate and the intensity of the masking components (impact on the flavor of the soymilk itself). The results are as in Table 26, which shows the average scores of each panelist.

**Table 26**

| | I | | II | |
|---|---|---|---|---|
| Concentration of Menthyl 3-Hydroxybutyrate Added | Off-Flavor Intensity | Masking Component Intensity | Off-Flavor Intensity | Masking Component Intensity |
| 100 ppm | 1.3 | 3.1 | 0.8 | 2.9 |
| 50 ppm | 1.5 | 2.3 | 1.4 | 1.9 |
| 10 ppm | 1.9 | 1.1 | 1.9 | 1.3 |
| 1 ppm | 2.4 | 0.4 | 2.5 | 0.5 |
| 100 ppb | 2.8 | 0.1 | 2.9 | 0.4 |

From the results in Table 26, it is clear that menthyl 3-hydroxybutyrate, at a concentration of 100 ppb or more and 100 ppm or less, masks the off-flavor derived from unsaturated fatty acids, and does not affect the flavor of the soymilk itself.

## Claims

1. An off-flavor suppressor for components derived from unsaturated fatty acids, comprising as an active ingredient at least one selected from the group consisting of nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol.

2. The off-flavor suppressor according to claim 1, wherein the off-flavor components derived from unsaturated fatty acids are at least one selected from the group consisting of (E)-2-nonenal, (E)-2-octenal, 1-octen-3-one, 1,5-octadien-3-one, 1-octen-3-ol, and 1,5-octadien-3-ol.

3. A flavor composition for suppressing off-flavors of components derived from unsaturated fatty acids, comprising as an active ingredient at least one selected from the group consisting of nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol.

4. The flavor composition for suppressing off-flavors according to claim 3, wherein the off-flavor components derived from unsaturated fatty acids are at least one selected from the group consisting of (E)-2-nonenal, (E)-2-octenal, 1-octen-3-one, 1,5-octadien-3-one, 1-octen-3-ol, and 1,5-octadien-3-ol.

5. A food and/or beverage containing off-flavor components derived from unsaturated fatty acids, comprising 0.001 ppt to 100 ppm of at least one selected from the group consisting of nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol.

6. The food and/or beverage according to claim 5, wherein the off-flavor components derived from unsaturated fatty acids are at least one selected from the group consisting of (E)-2-nonenal, (E)-2-octenal, 1-octen-3-one, 1,5-octadien-3-one, 1-octen-3-ol, and 1,5-octadien-3-ol.

7. A method for masking off-flavor components derived from unsaturated fatty acids, comprising blending at least one selected from the group consisting of nootkatone, linalyl butyrate, 1,4-dioxacycloheptadecan-5,17-dione, 2,3-hexanedione, β-damascenone, α-ionone, β-ionone, α-methyl ionone, γ-methyl ionone, oleic acid, nerolidol, 4-methyl-2-phenyl-2-pentenal, menthyl 3-hydroxybutyrate, 2-menthoxyethanol, and 3-menthoxypropan-1,2-diol in a food and/or beverage so that a total concentration thereof is 0.001 ppt or more and 100 ppm or less.

8. The method according to claim 7, wherein the off-flavor components derived from unsaturated fatty acids are at least one selected from the group consisting of (E)-2-nonenal, (E)-2-octenal, 1-octen-3-one, 1,5-octadien-3-one, 1-octen-3-ol, and 1,5-octadien-3-ol.
